(19) Europäisches Patentamt
European Patent Office
Office européen des brevets

(11) EP 4 357 417 A1

(12) **EUROPEAN PATENT APPLICATION**
published in accordance with Art. 153(4) EPC

(43) Date of publication:
**24.04.2024 Bulletin 2024/17**

(21) Application number: **22947732.8**

(22) Date of filing: **05.12.2022**

(51) International Patent Classification (IPC):
***C08L 67/04*** *(2006.01)*

(52) Cooperative Patent Classification (CPC):
Y02W 90/10

(86) International application number:
**PCT/CN2022/136554**

(87) International publication number:
**WO 2023/245997 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.08.2022 CN 202210977996**

(71) Applicants:
- **Beijing Bluepha Microbiology Technology Co., Ltd.**
  **Changping District**
  **Beijing 102206 (CN)**
- **Jiangsu Lansu Biomaterial Co., Ltd.**
  **Jiangsu 224500 (CN)**

(72) Inventors:
- **MA, Zhiyu**
  **Beijing 102206 (CN)**
- **MA, Yiming**
  **Beijing 102206 (CN)**
- **LI, Teng**
  **Beijing 102206 (CN)**
- **ZHANG, Haoqian**
  **Beijing 102206 (CN)**

(74) Representative: **Dr. Solf & Zapf**
**Patent- und Rechtsanwalts PartG mbB**
**Candidplatz 15**
**81543 München (DE)**

# (54) MARINE DEGRADABLE POLYHYDROXYALKANOATE COMPOSITION, MOLDED BODY AND PREPARATION METHOD THEREFOR

(57) The invention relates to the technical field of polyhydroxyalkanoate materials, and specifically discloses a marine degradable polyhydroxyalkanoate composition, a molded body and a preparation method thereof. The polyhydroxyalkanoate composition includes: (A): 38 to 89.5 parts of a polyhydroxyalkanoate; (B): 10 to 30 parts of an other fully biodegradable resin; (C): an additive, including: 0.1 to 0.5 parts of a chain extender, 0.1 to 1 parts of an antioxidant, and 0.1 to 1 part of a lubricant; (D): 0 to 30 parts of a filler. The molded body prepared from the composition provided by the present invention has high marine degradability and meets the marine biodegradation certification standard. In addition, the preparation method of the present invention can improve the processability and processing efficiency of the blended composition provided by the present invention.

EP 4 357 417 A1

## Description

### Priority information

The present invention claims the priority of Chinese patent application No. 202210977996.6 filed on August 16, 2022 with the State Intellectual Property Office of China, titled with "Marine degradable polyhydroxyalkanoate composition, molded body and preparation method thereof, which is incorporated herein by reference in its entirety.

### Technical field

The invention relates to the technical field of polyhydroxyalkanoate materials, in particular to a marine degradable polyhydroxyalkanoate composition, a molded body and a preparation method thereof.

### Background

Biodegradable plastics are a class of plastics that can be degraded by the action of microorganisms that exist in nature. Since the "Kyoto Protocol" came into effect in 1997, many attentions have been drawn to the development of biodegradable plastics as a solution to deal with global warming, and techniques for producing such plastics by using plants as raw materials have been developed. An ideal biodegradable plastic is non-toxic and harmless after degradation, and has excellent performance in use.

However, not all biodegradable plastics can be degraded in the marine environment. Experiments have proved that polylactic acid (PLA) straws, films and other products have begun to disintegrate into smaller fragments in 24 months in natural soil environment, but maintain a relatively complete original form in 24 months in marine environment. Therefore, even biodegradable materials like PLA, PBAT (poly(butylene adipate-co-terephthalate)) are difficult to be biodegraded in marine environment. If these plastics are discarded and not properly treated, they will be gradually released into the environment, eventually flow to the ocean through rivers and accumulate in large quantities. If they are accidentally eaten by marine animals and birds, they will cause serious damage to the health of the marine animals and birds. Currently, regarding the certification of marine degradability, the Belgian agency TUV AUSTRIA (formerly Vincotte) has developed a certification scheme based on the withdrawn standard ASTM D7081. Simply, the scheme requires a biodegradable product should be at least 90% degraded in 6 months. The corresponding certification mark is OK Biodegradable Marine (marine biodegradable certification standard).

In the prior art, a degradable material such as polylactic acid (PLA) is blended with polyhydroxyalkanoates (PHAs) to improve its marine degradability. However, considering the processing and molding properties, the amount of each component added is somewhat limited. Therefore, the current blended materials still take a long time to decompose, and cannot meet the requirements of marine degradability, and it is difficult to meet high processability and achieve the OK Biodegradable Marine certification standard.

Therefore, there is still a need for a blended polyhydroxyalkanoate resin composition, which has not only high marine degradability, but also improved processability and processing efficiency of the blended material.

### Summary of the invention

One of the objects of the present invention is to provide a marine degradable polyhydroxyalkanoate composition. A molded body prepared from the composition as provided has a high marine degradation rate (especially, it can achieve 90% or more degradation in 6 months). In addition, the preparation method provided can effectively improve processing efficiency and reduce energy consumption in mass production.

The second object of the present invention is to provide a molded body molded from the polyhydroxyalkanoate composition.

The third object of the present invention is to provide a method for preparing the molded body.

In order to realize the above-mentioned objects of the present invention, the following technical solution is proposed.

In a first aspect, the present invention provides a marine degradable polyhydroxyalkanoate composition, comprising: in parts by weight,

(A): 38 to 89.5 parts of a polyhydroxyalkanoate;
(B): 10 to 30 parts, preferably 10 to 15 parts of an other fully biodegradable resin;
(C): an additive, including: 0.1 to 0.5 parts of a chain extender, 0.1 to 1 parts of an antioxidant, and 0.1 to 1 parts of a lubricant;
(D): 0 to 30 parts of a filler.

Exemplary components included in the polyhydroxyalkanoate composition will be described in detail below. However, these embodiments are only exemplary, and the present invention is not limited thereto.

Polyhydroxyalkanoate (A)

The polyhydroxyalkanoate may be one kind of polyhydroxyalkanoate, or a combination of two or more different polyhydroxyalkanoates.

The source of the polyhydroxyalkanoate is not particularly limited, and may be selected from commonly used raw materials in the art, such as polymers containing 3-hydroxyalkanoate structural unit and/or 4-hydroxyalkanoate structural unit. Preferably, the polyhydroxyalkanoate is particularly a polyhydroxyalkanoate produced by microorganisms, wherein all the 3-hydroxyalkanoate structural units are included in the form of (R)3-hydroxyalkanoate structural unit.

The polyhydroxyalkanoate may be a homopolymer of a hydroxyalkanoic acid monomer; or a copolymer of two or more different hydroxyalkanoic acid monomers, such as a terpolymer, a tetrapolymer, and the like.

In some embodiments, the polyhydroxyalkanoate may be an aliphatic polyester comprising repeating units represented by the following formula (1):

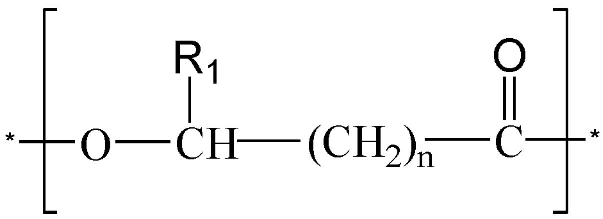

(1)

wherein, $R_1$ is hydrogen or a linear or branched C1-C15 alkyl, preferably a linear or branched C1-C10 alkyl, more preferably a linear or branched C1-C8 alkyl, especially a linear or branched C1-C6 alkyl, for example, methyl, ethyl, propyl, butyl, isobutyl, tert-butyl, pentyl, hexyl, etc.; and
n is 1 or 2.

Preferably, the polyhydroxyalkanoate comprises at least one poly(3-hydroxyalkanoate) containing only 3-hydroxyalkanoate structural unit, or containing 3-hydroxyalkanoate structural unit and at least one of other hydroxyalkanoate structural units (for example, 4-hydroxyalkanoate structural unit, etc.).

As a specific embodiment, the polyhydroxyalkanoate is a homopolymer containing only 3-hydroxybutyrate structural unit, or a copolymer containing 3-hydroxybutyrate structural unit and an other structural unit; wherein, the other structural unit is selected from at least one of 3-hydroxypropionate, 3-hydroxyvalerate, 3-hydroxyhexanoate, 3-hydroxyheptanoate, 3-hydroxyoctanoate, 3-hydroxynonanoate, 3-hydroxydecanoate, 3-hydroxyundecanoate and 4-hydroxybutyrate. For example, the polyhydroxyalkanoate can be: poly(3-hydroxybutyrate), poly(3-hydroxybutyrate-co-3-hydroxypropionate), poly(3-hydroxybutyrate-co-3-hydroxyvalerate) (PHBV), poly(3-hydroxybutyrate-co-3-hydroxyvalerate-co-3-hydroxyhexanoate) (P3HB3HV3HH), poly(3-hydroxybutyrate-co-3-hydroxyhexanoate) (PHBH), poly(3 -hydroxybutyrate-co-3 -hydroxyheptanoate), poly(3 -hydroxybutyrate-co-3 -hydroxycaprylate) (PHBO), poly(3 -hydroxybutyrate-co-3 -hydroxynonanoate), poly(3 -hydroxybutyrate-co-3 -hydroxydecanoate), poly(3 -hydroxybutyrate-co-3 -hydroxyundecanoate), poly(3-hydroxybutyrate-co-4-hydroxybutyrate) (P34HB), etc. In particular, poly(3-hydroxybutyrate-co-3-hydroxyhexanoate) is preferred considering processability and mechanical properties and the like. 3-hydroxyhexanoate structural unit matches better with 3-hydroxybutyrate structural unit.

As a preferred embodiment, the polyhydroxyalkanoate is selected from at least one of poly(3 -hydroxybutyrate-co-3 -hydroxyhexanoate), poly(3-hydroxybutyrate-co-3-hydroxyvalerate), poly(3-hydroxybutyrate-co-4-hydroxybutyrate), poly(3 -hydroxybutyrate-co-3 -hydroxyoctanoate), poly(3-hydroxybutyrate-co-3-hydroxyvalerate-co-3-hydroxyhexanoate).

Preferably, in the copolymer of 3-hydroxybutyrate structural unit and the other structural unit, the average content ratio of said 3-hydroxybutyrate structural unit to the other structural unit is 50/50 to 99/1 (mol%/ mol%); preferably 80/20 to 94/6 (mol%/mol%). In the case that the polyhydroxyalkanoate raw material is a mixture of two or more polyhydroxyalkanoates, the average content ratio means the molar ratio of each monomer contained in the whole mixture. In some embodiments, the polyhydroxyalkanoate has a weight average molecular weight of 100,000 to 1,000,000; preferably 200,000 to 900,000; more preferably 300,000 to 800,000. When the weight average molecular weight is less than 100,000, the mechanical properties of the obtained polyhydroxyalkanoate-based resin molded body tend to become worse. On the other hand, when the weight-average molecular weight exceeds 1,000,000, the load on the machine tends to increase, and productivity tends to decrease during melt processing.

The content of the polyhydroxyalkanoate (A) can be, for example, 38 parts by weight, 39 parts by weight, 40 parts by weight, 42 parts by weight, 45 parts by weight, 48 parts by weight, 50 parts by weight, 55 parts by weight, 60 parts by weight, 65 parts by weight, 70 parts by weight, 75 parts by weight, 80 parts by weight, 85 parts by weight, 88 parts by weight, or 89 parts by weight, etc.

Other fully biodegradable resin (B)

The other fully biodegradable resin (B) refers to a "fully biodegradable material" that do not contain polyhydroxyalkanoate, that is, a material that is completely degraded into low-molecular compounds by the action of microorganisms that exist in nature such as bacteria, molds (fungi) and algae; or a material that can meet or conform to ISO14855, EN13432, ASTM D6400 and other fully biodegradable standards.

In some embodiments, the other fully biodegradable resin (B) is selected from at least one of polylactic acid (PLA), polybutylene succinate (PBS), poly(butylene succinate-coadipate) (PBSA), poly(butylene succinate-co-terephthalate) (PBST), poly(butylene adipate-co-terephthalate) (PBAT), polycaprolactone (PCL), polyglycolic acid (PGA).

The content of the other fully biodegradable resin (B) can be, for example, 10 parts by weight, 11 parts by weight, 12 parts by weight, 13 parts by weight, 14 parts by weight, 15 parts by weight, 16 parts by weight, 17 parts by weight, 18 parts by weight, 19 parts by weight parts by weight, 20 parts by weight, 21 parts by weight, 22 parts by weight, 23 parts by weight, 24 parts by weight, 25 parts by weight, 26 parts by weight, 27 parts by weight, 28 parts by weight, 29 parts by weight, or 30 parts by weight, etc., and the preferred content is 10 to 15 parts by weight.

Additive (C)

The additive includes: 0.1 to 0.5 parts of chain extender, 0.1 to 1 parts of antioxidant, and 0.1 to 1 parts of lubricant.

Because the solubility parameter of polyhydroxyalkanoate is somewhat different from that of the other fully biodegradable resin, if the two components are directly blended, it will lead to phase separation in the prepared material, molded body or product, such that the performance of the polyhydroxyalkanoate straw or other products is poor, showing obvious delamination and even causing discontinuous production. The chain extender used in the invention can effectively improve the interfacial compatibility of the polyhydroxyalkanoate and the other fully biodegradable resin, thereby ensuring the better performance of the prepared polyhydroxyalkanoate straw or other products.

Because polylactic acid (PLA), polyhydroxyalkanoate (PHA), poly(butylene adipate/butylene terephthalate) (PBAT), polyethylene terephthalate (PET), polybutylene terephthalate (PBT) and other biodegradable polymers are rich in reactive functional groups such as carboxyl and hydroxyl groups, thermal degradation will inevitably occur during processing and application, resulting in decreased melt strength and mechanical properties of the products. Therefore, the development and application of reactive functional polymer chain extenders is an important way to improve the processing and application performance of polycondensation biodegradable polymers.

It is known that the function of the chain extender is to expand the length of the molecular chain and improve the tensile strength of the material, and generally the chain extender with highly active reactive groups can effectively expand the length of the molecular chain. Polyols, such as glycol, are relatively free of highly active reactive groups.

In the present application, chain extenders with highly active groups, such as epoxy chain extenders, oxazoline chain extenders, isocyanate chain extenders, etc. are selected.

Epoxy-functionalized chain extenders contain a certain amount of epoxy functional groups and have high activity. They can react with the terminal hydroxyl groups, carboxyl groups, and amino groups and the like in polycondensation polymers during processing, which can not only improve the molar mass of the resins, but can also reconnect the broken chain, increase the viscosity of the melt, and improve the performance of the product.

Oxazoline chain extenders are mainly categorized as polymeric type and monomeric type. Polymeric oxazoline means that a certain amount of oxazoline groups are introduced into the polymer molecular chain by physical and chemical methods. Monomeric oxazoline means that two oxazoline groups are contained in a molecule, and the representative example is 1,3-PBD bisoxazoline compound.

Isocyanate is very easy to react with the active hydrogen on the polymer chain of biodegradable polymers to produce chain extension or crosslinking effects. One example is diphenylmethane diisocyanate (MDI). MDI is one of the important raw materials in the polyurethane industry, and it can also be used as a chain extender for polyester biodegradable plastics.

In some embodiments, the chain extender is at least one of ADR4468, ADR 4370F, RPS 1005, and MDI-50.

The content of the chain extender can be, for example, 0.1 parts by weight, 0.15 parts by weight, 0.2 parts by weight, 0.3 parts by weight, 0.4 parts by weight, 0.45 parts by weight, or 0.5 parts by weight.

Antioxidants can eliminate free radicals generated during twin-screw pelletising of the polyhydroxyalkanoate and during storage and use of the pellets, promote the decomposition of hydroperoxides, prevent chain reactions, and delay or inhibit polymer oxidation process.

In some embodiments, the antioxidant is selected from at least one of antioxidants 1010, 1076, 168 and 626.

The content of antioxidants can be, for example, 0.1 parts by weight, 0.2 parts by weight, 0.3 parts by weight, 0.35 parts by weight, 0.4 parts by weight, 0.45 parts by weight, 0.5 parts by weight, 0.55 parts by weight, 0.6 parts by weight, 0.7 parts by weight, 0.8 parts by weight, 0.85 parts by weight, 0.9 parts by weight, or 1 part by weight.

In the composition system of the present invention, a fatty acid salt or a fatty amide is further added as lubricant to reduce the frictional heat between materials and the thermal degradation of the composition, thereby improving the processability of the polyhydroxyalkanoate composition during extrusion pelletising. In addition, the lubricant of the fatty acid salt or the fatty amide also has the effect of anti-sticking agent in the composition system of the present invention, and can also improve the antistatic property of plastic products.

In some embodiments, the lubricant is selected from at least one of fatty acid salt lubricants and fatty amide lubricants; more preferably, the lubricant is selected from at least one of calcium stearate and oleamide.

The content of the lubricant can be, for example, 0.1 parts by weight, 0.2 parts by weight, 0.3 parts by weight, 0.4 parts by weight, 0.5 parts by weight, 0.6 parts by weight, 0.7 parts by weight, 0.8 parts by weight, 0.9 parts by weight, or 1 part by weight.

In some embodiments, the content of the additive (C) is 0.5 to 2 parts.

In addition, on the premise of not inhibiting the effect of the present invention, other additives can also be added and compounded with the composition according to the production requirements of the molded body. The other additives may include an organic or inorganic material such as a nucleating agent, a plasticizer, a crosslinking agent, a foaming agent, an anti-sticking agent, an antistatic agent, a pigment or other inert fillers. The organic or inorganic material may be used alone or in combination of two or more materials. Moreover, the amount of the other additives can also be adjusted according to production requirements, and there is no particular limitation in the present invention.

Filler (D)

The filler is an optional component, and includes an inorganic filler and/or a bio-based filler. As a common filler, the inorganic filler can reduce the material cost and improve the performance to a certain extent. The inorganic filler includes calcium carbonates (heavy calcium carbonate, light calcium carbonate), mica, talc, montmorillonite, wollastonite, aluminum hydroxide, kaolin, barium sulfate, magnesium hydroxide, diatomaceous earth, carbon black, silica, etc., which are commonly used in the field of materials, as well as inorganic fillers that are widely used in the field of biodegradable materials. Studies have shown that the inorganic fillers commonly used in biodegradable materials can also be normally used in polyhydroxyalkanoates. In the present invention, the inorganic filler also has nucleating effect to promote the crystallization of the polyhydroxyalkanoate, thereby reducing the processing difficulty of the polyhydroxyalkanoate. Preferably, the inorganic filler is selected from at least one of talc and activated light calcium carbonate.

The bio-based filler can reduce the material cost, increase the bio-based content of the material as well as the biodegradation rate. The bio-based filler includes, but are not limited to, common bio-based materials in the field of fillers, including, but not limited to, starch, plant residues, cellulose, hemicellulose and lignin. However, in actual production, the bio-based filler is relatively difficult to be processed and certain pre-treatments are required. The bio-based fillers used in the present invention are all treated bio-based fillers, and there is no more explanation herein. Preferably, the bio-based filler is selected from at least one of pre-plasticized starch, microcrystalline cellulose and coffee grounds. More preferably, the bio-based filler is a pre-plasticized starch. The pre-plasticized starch refers to a starch containing a small molecule alcohol plasticizer prepared from starches of different plant origins by a process of certain mixing and dispersing so as to incorporate a small molecular alcohol having a plasticizing effect, such as glycerin and sorbitol, into the starch system.

The content of the filler (D) can be, for example, 0, 1 parts by weight, 2 parts by weight, 3 parts by weight, 5 parts by weight, 6 parts by weight, 8 parts by weight, 10 parts by weight, 12 parts by weight, 14 parts by weight, 15 parts by weight, 16 parts by weight, 18 parts by weight, 20 parts by weight, 22 parts by weight, 25 parts by weight, 26 parts by weight, 27 parts by weight, 28 parts by weight, or 30 parts by weight.

The polyhydroxyalkanoate composition of the present invention can be prepared by conventional techniques known in the art, and it can be directly mixed to obtain a powder, or further melt-extruded in an extruder, and then made into pellets.

The extrusion pelletising method may include the processes of mixing the polyhydroxyalkanoate composition in proportion, extruding in a twin-screw extruder, cooling and cutting the same to obtain polyhydroxyalkanoate pellets.

The mixing can be carried out in a high-speed mixer or a conventional mixer at 100 r/min to 1500 r/min for 3min to 10min at a temperature of room temperature to 80 °C.

The twin-screw extrusion can be carried out on a parallel co-rotating twin-screw extruder, and the model of the extruder and the diameter of the extruder screw are not particularly limited, and the output is not particularly limited, either. The processing is carried out on a parallel co-rotating twin-screw extruder with a LID ratio of 36:1 to 56:1, wherein the temperatures of various zones are set at 45 °C to 230 °C and the screw speed is 200 to 500 r/min.

The cooling and cutting refer to the process of cooling and cutting the polyhydroxyalkanoate composition after extruding it through a twin-screw extruder. Cooling and cutting methods include but not limited to: cooling on an air-cooled conveyor belt and granulator cutting (air cooling), cooling under water bathes of different temperature conditions in a water-cooled water tank and granulator cutting (water cooling), die face hot cutting and air cooling (die face air cooling), die face cutting and water cooling (die face water cooling), underwater cutting, etc.

In the present invention, after the above-mentioned composition is blended and pelletized through twin-screw extrusion, the polyhydroxyalkanoate pellets have a fast crystallization rate, and the extruded molded body has a lower viscosity, which reduces the sticking phenomenon of the molded body. Therefore, in the preparation process of polyhydroxyalkanoate pellets, the cooling and cutting do not need to be performed for cool molding at the crystallization temperature, but can be carried out at normal temperature or at room temperature, which effectively saves energy consumption. The traditional crystallization temperature is 20 °C to 40 °C higher than room temperature, and certain electric heating equipment is needed to heat water or air to reach the corresponding temperature. Therefore, under the process conditions that cool molding can be performed without using the crystallization temperature, no electric heating is needed for heating, which saves a lot of energy consumption and reduces processing cost.

In the second aspect, the present invention also provides a molded body formed from the polyhydroxyalkanoate composition.

The molded body can be a film, a straw, a fiber, a plate, etc.

In the third aspect, the present invention also provides a method for preparing the molded body. The molded body can be prepared by various thermoforming methods such as compression molding, extrusion molding, injection molding, calendering molding, tape casting, blow molding, biaxial stretching molding, etc., and can also be prepared by a non-thermoforming method such as solution casting. Preferably, it is prepared by a thermoforming method.

In some embodiments, the method for preparing the molded body comprises: heating and melting the polyhydroxyalkanoate composition at a first temperature that is 10 °C to 60 °C higher than the melting temperature; cooling and molding at a second temperature of 20 °C to 60 °C (preferably room temperature). It is preferable that the cooling and molding are performed at room temperature to obtain a molded body. The room temperature herein means 20 °C to 30 °C and up to 40 °C, typically and without limitation, it can be 20 °C, 25 °C, 30 °C, or 35 °C.

In a conventional method for preparing a polyhydroxyalkanoate molded body, the composition comprising the polyhydroxyalkanoate is usually heated at a first temperature and melted; then cooled and molded at a second temperature. The polyhydroxyalkanoate tends to stick in the molten state due to the slow crystallization rate, which will seriously affect the processability. Therefore, setting of the second temperature is extremely important, and the second temperature affects the time it takes for the polyhydroxyalkanoate molded body to reach a non-sticking state. It is confirmed by a large number of tests that the second temperature is between the glass transition temperature and the melting point temperature of the obtained molded body, and can be 30 °C or more higher than the glass transition temperature of the obtained molded body, and 20 °C or less lower than the melting point of the resulting molded body, and is usually 40 °C to 60 °C. For the composition of the present invention, there is no need to consider the setting of the second temperature, that is, it does not need to set a higher second temperature condition, a molded body with a better molding state can be directly obtained at room temperature after the composition is melted at the first temperature, which saves energy consumption, and improves processing efficiency.

The polyhydroxyalkanoate pellets prepared by the above-mentioned preparation method of the polyhydroxyalkanoate composition can be applied in different processing methods to prepare different products, for example, preparing straws on a straw machine, preparing films on a blown film machine, preparing films or sheets on a casting machine, preparing products of different shapes on an injection molding machine, preparing sheets or plates on a sheet extruder, preparing different fibers, non-woven or melt-blown cloth on a fiber extruder, etc. The application of the polyhydroxyalkanoate pellets obtained from the above polyhydroxyalkanoate composition and its preparation method is not particularly limited, and the processing of the molded body is illustrated below by examples of the preparation of straws on a straw machine and the preparation of cast films or sheets on a casting machine.

For example, the preparation method of straws includes process procedures of: extruding polyhydroxyalkanoate pellets obtained from the above polyhydroxyalkanoate composition and its preparation method through a straw extruder, and cooling and cutting the same to prepare polyhydroxyalkanoate straws with different wall thicknesses, different diameters, and different lengths.

The straw machine can be a common single-screw straw machine, and can be a single-color straw machine or a multi-color straw machine. The temperatures of various zones of the straw machine are set at 45 °C to 220 °C, and the screw speed is 20 to 200 r/min.

The cooling and cutting refer to cooling and forming in water at 0 °C to 60 °C, and cutting into polyhydroxyalkanoate straws by a cutting machine.

For another example, the preparation method of a film sheet includes process procedures of: extruding the polyhydroxyalkanoate pellets obtained from the above polyhydroxyalkanoate composition and its preparation method through a casting machine, and cooling and forming the same to prepare polyhydroxyalkanoate film sheets of different

thicknesses.

The casting machine can be a common single-screw casting machine, and can be a single-layer casting machine or a multi-layer casting machine. The temperatures of various zones of the casting machine are set at 45 °C to 210 °C, and the screw speed is 50 to 200 r/min.

The cooling and forming refer to setting the temperature of the circulating oil or circulating water in the casting roll at 0 °C to 60 °C.

In addition, on the premise of not inhibiting the effect of the present invention, other additives can also be added and compounded with the composition according to the production requirements of the molded body. Said additives may include plasticizers, light stabilizers, heat stabilizers, anti-hydrolysis agents, etc.; toners or color masterbatches of different colors; other types of cross-linking agents, chain extenders, lubricants; other types of organic or inorganic materials, etc. The organic or inorganic materials may be used alone or in combination of two or more materials. Moreover, the amount of additives can also be adjusted according to production needs.

**Beneficial effects**

1. The polyhydroxyalkanoate blend composition provided by the present invention can not only meet high marine degradability to achieve the OK Biodegradable Marine degradable certification standard, but also improve the processability and processing efficiency of the blended material.
2. Various molded bodies prepared by using the polyhydroxyalkanoate composition and its preparation method provided by the present invention have a fast crystallization rate, and there is no need to use the conventional process of setting the second temperature for crystallization, which improves the processing efficiency and reduces the processing costs.

The present invention has been described in detail hereinbefore, but the above-described embodiments are merely illustrative in nature and are not intended to limit the present invention. Furthermore, the present application is not to be bound by any theory presented in the preceding prior art or the summary or the following examples.

Neither the endpoints nor any values of the ranges disclosed herein are limited to such precise ranges or values, and these ranges or values should be understood to include values close to these ranges or values. For numerical ranges, the values between the endpoints of each range, between the endpoints of each range and individual point values, and between individual point values can be combined with each other to obtain one or more new numerical ranges, and these numerical ranges should be considered as specifically disclosed herein.

**Detailed embodiments**

The present invention will be further described below with reference to the examples. It should be noted that the following examples are provided only for the purpose of illustration and are not intended to limit the protection scope of the present invention.

Unless otherwise specified, the raw materials, reagents, and methods used in the examples are conventional raw materials, reagents, and methods in the art.

All raw materials used in the following examples and comparative examples are commercially available unless otherwise specified.

<u>Polyhydroxyalkanoate (A):</u>

Poly(3-hydroxybutyrate-co-3-hydroxyhexanoate) (PHBH), brand: BP330, 3HB (3-hydroxybutyrate unit) content: 94%, weight average molecular weight: about 100,000 to 800,000, Beijing Bluepha Microbiology Technology Co., Ltd.

Poly(3-hydroxybutyrate-co-3-hydroxyhexanoate) (PHBH), brand: BP350, 3HB (3-hydroxybutyrate unit) content: 89%, weight average molecular weight: about 100,000 to 800,000, Beijing Bluepha Microbiology Technology Co., Ltd. Poly(3-hydroxybutyrate-co-3-hydroxyvalerate) (PHBV), weight average molecular weight: about 300,000 to 800,000, Beijing Bluepha Microbiology Technology Co., Ltd. Poly(3-hydroxybutyrate-co-4-hydroxybutyrate) (P34HB), weight average molecular weight: about 300,000 to 800,000, Beijing Bluepha Microbiology Technology Co., Ltd. Poly(3-hydroxybutyrate-co-3-hydroxyoctanoate) (PHBO), weight average molecular weight: about 300,000 to 800,000, Beijing Bluepha Microbiology Technology Co., Ltd. Poly(3-hydroxybutyrate-co-3-hydroxyvalerate-co-3-hydroxyhexanoate (P3HB3HV3HH), weight average molecular weight: about 300,000 to 800,000, Beijing Bluepha Microbiology Technology Co., Ltd.

Other fully biodegradable resin(B):

Polylactic acid (PLA), catalog No. 4032D, manufacturer: NatureWorks.
Polybutylene succinate (PBS), catalog No. P909169, manufacturer: McLean.
Polybutylene succinate/adipate (PBSA), catalog No. TH802A, manufacturer: Xinjiang Blue Ridge Tunhe Sci. & Tech. Co., Ltd.
Polybutylene succinate/terephthalate (PBST), catalog No. TS159, manufacturer: ANHUI XINKE NEW MATERIALS CO., LTD.
Polybutylene adipate/terephthalate (PBAT), catalog No. SQ-C1200, manufacturer: BASF, Germany.
Polycaprolactone (PCL), catalog No. 2200, manufacturer: Perstorp, Sweden.
Polyglycolic acid (PGA), catalog No. 26009-03-0, manufacturer: Suzhou Qihang Biotechnology.
In this example, a marine degradable polyhydroxyalkanoate composition was provided, which included: (A): 38 to 89.5 parts by weight of polyhydroxyalkanoate, which uses PHBH, PHBV, P34HB, PHBO, or P3HB3HV3HH in this example; (B): 10 to 30 parts by weight of other fully biodegradable resin, which uses PLA, PBS, PBSA, PBST, PBAT, PCL or PGA in this example; (C): additives, including 0.1 to 0.5 parts by weight of a chain extender, which uses ADR4468 (brand: BASF, model: Joncryl ADR-4468), ADR4370F (brand: BASF, model: Joncryl ADR4370F), RPS 1005 (brand: Nippon Shokubai, model : RPS-1005), or MDI-50 (brand: BASF, model: MDI-50) in this example; 0.1 to 1 parts by weight of an antioxidant, which uses the antioxidant 1010, 1076, 168, or 626 in this example, and 0.1 to 1 parts by weight of a lubricant, which uses calcium stearate or oleamide in this example; and (D): 0 to 30 parts by weight of a filler, which uses activated light calcium carbonate, talc, or pre-plasticized starch in this example.
The preparation method of the polyhydroxyalkanoate composition is provided below, including the preparation of polyhydroxyalkanoate composition pellets, straws, and films:

### Examples 1 to 22 and Comparative Examples 1 to 3: Extrusion Pelletising

The compositions provided in Tables 1, 2 and 3 were added into a high-speed mixer for mixing. The mixing temperature was 20 °C to 80 °C, the mixing speed was 100 to 1500 r/min, and the mixing time was 3 to 10 min. The composition was placed in the lower hopper or weight loss scale of the twin-screw extruder, the length-to-diameter ratio of the extruder was 36:1 to 56:1; the temperature of the twin-screw extruder was set at 45 °C to 230 °C (the first temperature), the screw speed was 200 to 500 r/min. Then, extrusion pelletising was carried out at the second temperature by cutting methods such as air-cooled strand cutting, water-bath strand cutting, die face hot cutting, water ring cutting and underwater cutting. The prepared pellets were dried in a blower drying oven to eliminate the influence of moisture on the properties of the pellets, and at the same time the pellets were completely crystallized to obtain polyhydroxyalkanoate composition pellets.
The specific processing parameters of each example and comparative example are shown in Tables 1, 2 and 3.

### Examples 23 to 27 and Comparative Examples 4 to 6: straw processing

In Examples 23 to 27, the polyhydroxyalkanoate pellets obtained by extrusion pelletization in Examples 1, 2, 3, 7, and 8 were used for straw processing, respectively.
In Comparative Examples 4 to 6, the polyhydroxyalkanoate pellets obtained by extrusion pelletization in Comparative Examples 1, 2, and 3 were used for straw processing, respectively. According to production and processing requirements, polyhydroxyalkanoate straws with different wall thicknesses, diameters, and lengths could be prepared by subjecting the polyhydroxyalkanoate pellets to process procedures of extruding through a straw machine, cooling and cutting straws, etc.
The specific steps were: placing the polyhydroxyalkanoate pellets obtained as above into a single-screw straw machine (Nanjing Saiyi Technology Co., Ltd.), of which the temperatures of various zones were set at 45 °C to 220 °C, and the screw speed was set at 20 to 200 r/min, and cooling and cutting straws at the second temperature (water bath temperature for the straws). The specific process parameters of each example and comparative example are as shown in Table 4.

### Examples 28 to 32 and Comparative Examples 7 to 9: film processing

In Examples 28 to 32, the polyhydroxyalkanoate pellets obtained by extrusion pelletization in Examples 1, 2, 9, 13, and 15 were used for casting processing, respectively.
In Comparative Examples 7 to 9, the polyhydroxyalkanoate pellets obtained by extrusion pelletization in Comparative Examples 1, 2 and 3 were used for casting processing, respectively.
The polyhydroxyalkanoate pellets were extruded through a casting machine, cooled and formed to prepare

polyhydroxyalkanoate film sheets with different thicknesses.

The specific steps were: placing the polyhydroxyalkanoate pellets obtained above in a single-layer casting machine (Wuhan Kunyuan Casting Technology Co., Ltd.), of which the temperature was set at 45 °C to 210 °C and the screw speed was set at 50 to 200 r/min, cooling and forming at the temperature of the circulating oil or circulating water (the second temperature) in the casting roll to prepare films.

The specific process parameters of each example and comparative example are as shown in Table 5.

**Evaluation method of the properties of the polyhydroxyalkanoate pellets:**

The polyhydroxyalkanoate composition pellets were prepared into test samples that meet the corresponding standards by an injection molding machine.

The tensile strength and elongation at break were measured under the condition of a test speed of 5mm/min according to ISO527-2-2012;

The notched impact strength was measured according to ISO179-1:2019;
The heat deflection temperature was measured at 0.45MPa according to ISO75-2:2013;
The unit of tensile strength is MPa, the unit of elongation at break is %, the unit of notched impact strength is $kJ/m^2$, and the unit of heat deflection temperature is °C.

Difficulty of extrusion pelletising processing:

○: the extrusion pelletising is continuous and stable, and the pellets can be stably cut without sticking;
△: The extruder is stable during extrusion and the extruded strands are not easy to break; the crystallization rate of the extruded strands is slow, and the pellets stick together, but they can be roughly separated by vibration after a period of time;
×: The extruder is unstable during extrusion and the extruded strands are broken; the cooling rate of the extruded strands is slow and the strands cannot be cut; the pellets stick together and cannot be separated.

**Evaluation method of polyhydroxyalkanoate straw:**

Difficulty of straw processing:

○: The extrusion is continuous and stable, the extruded straws are stable in the cooling tank, and the cutting of the extruded strands is stable;
△: The straw machine is stable during extrusion; the crystallization rate of the extruded straws is slow, and the straw may deform by external force after cutting, crystallization is complete after a certain period of time, and it is difficult to deform;
×: The straw machine is unstable during extrusion and the extrudate is broken; the extrusion speed of the extruded straws is slow, the extruded straws are difficult to be cut; the straws stick together and cannot be separated.

**Evaluation method of polyhydroxyalkanoate film:**

Difficulty of film sheet processing:

○: The extrusion is continuous and stable, the film forming process is stable, there is no roll-sticking phenomenon during the processing, and there is no sticking phenomenon for the film or sheet during winding;
△: The extrusion is continuous and stable, the film forming process is relatively stable, there is a small amount of roll-sticking during the processing, and the film has a certain degree of sticking when winding, but can be separated after a certain period of time;
×: The casting machine is unstable during extrusion, the material is broken at the casting roll with serious roll-sticking, and it is impossible to process into a film.

**Marine biodegradation experiment:**

The prepared molded body of the same specification was stored in seawater collected in Shenzhen Bay Park, Futian District, Shenzhen at 28°C ± 2 °C for 6 months, and then the weight was measured and the biodegradability was evaluated according to the following criteria. The degradation is calculated by the following equation, where the sample weight refers to the mass of which impurities such as ash and moisture are subtracted.

$$\text{Degradation (\%)} = 100 - (\text{sample weight after 6 months/sample weight before test}) \times 100;$$

○: The degradation is 90% or more;
Δ: The degradation is 50% or more and less than 90%;
X: The degradation is less than 50%.

The results are listed in Tables 1 to 5 below.

Table 1

| No. | Example 1 | Example 2 | Example 3 | Example 4 | Example 5 | Example 6 | Example 7 | Example 8 | Example 9 |
|---|---|---|---|---|---|---|---|---|---|
| PHBH-BP3 30 | 89.5 | 38.55 | 48.5 | 70.45 | 38.5 | 58.65 | 60.45 | 28.7 | |
| PHBH-BP3 50 | | | | | 30 | | 10 | | 50 |
| PHBV | | | | | | | | | 9.1 |
| P34HB | | | | | | 20 | | | |
| PHBO | | | | | | | 15 | | |
| P3HB3HV 3HH | | | | | | | | 10 | |
| PLA | | | 15 | | | 5 | | | 10 |
| PBS | | | | | | | 10 | | |
| PBSA | | | 5 | | | | | | |
| PBST | | | | 13 | | | | | |
| PBAT | 10 | 30 | | | | | | | |
| PCL | | | | | 15 | | | | |
| PGA | | | | | | 5 | | 30 | |
| Activated light calcium carbonate | | | | | | | | 5 | 30 |
| Talc | | | | | | | 3 | | |
| Pre-plastici zed starch | | 30 | 30 | 15 | 15 | 10 | | 25 | |
| ADR 4468 | 0.1 | 0.5 | 0.5 | 0.1 | 0.3 | 0.15 | 0.5 | 0.2 | 0.3 |
| 1010 | 0.1 | 0.25 | 0.3 | 0.1 | 0.1 | 0.7 | | | |
| 1076 | | | | 0.25 | | | 0.1 | 0.1 | 0.1 |
| 168 | 0.1 | 0.3 | | | | | 0.25 | | |
| 626 | | | 0.4 | 0.1 | 0.1 | 0.3 | | 0.7 | |
| Calcium stearate | 0.2 | 0.4 | | | 1 | | | 0.3 | |
| Oleamide | | | 0.3 | 1 | | 0.2 | 0.7 | | 0.5 |

(continued)

| | | | | | | | | | |
|---|---|---|---|---|---|---|---|---|---|
| Process parameters | | | | | | | | | |
| Mixing temperature (°C) | room temperat ure | 60 | 80 | room temperat ure | 40 | room temperat ure | room temperat ure | 50 | 45 |
| Mixing speed (r/min) | 200 | 1500 | 1500 | 500 | 1000 | 200 | 400 | 800 | 500 |
| Mixing time (min) | 5 | 10 | 10 | 7 | 5 | 4 | 3 | 10 | 10 |
| LID ratio of extruder | 36:1 | 36:1 | 56:1 | 52:1 | 48:1 | 40:1 | 44:1 | 52:1 | 48:1 |
| Extruder temperature range (°C) | 50-160 | 50-160 | 45-170 | 60-150 | 50-160 | 45-200 | 60-150 | 70-230 | 60-150 |
| Screw speed (r/min) | 350 | 300 | 500 | 450 | 450 | 500 | 200 | 200 | 400 |
| Cool cutting manner | water cooling | water cooling | air cooling | air cooling | air cooling | die face air cooling | die face water cooling | die face water cooling | air cooling |
| The second temperature for extrusion pelletizatio n (°C t) | room temperat ure | room temperat ure | room temperat ure | room temperat ure | room temperat ure | room temperat ure | room temperat ure | room temperat ure | room temperat ure |
| Physical property parameters | | | | | | | | | |
| Tensile Strength (MPa) | 33.15 | 23.51 | 27.33 | 35.04 | 26.91 | 37.84 | 29.06 | 53.91 | 25.33 |
| Elongation at break (%) | 17 | 50 | 7 | 20 | 76 | 37 | 30 | 6 | 117 |
| Notched impact strength ($kJ/m^2$) | 3.51 | 5.04 | 2.31 | 3.83 | 8.95 | 2.33 | 3.18 | 2.19 | 4.14 |
| Heat deflection temperature (0.45MPa ° C) | 108 | 79 | 68 | 110 | 78 | 119 | 97 | 123 | 79 |
| Difficulty of extrusion pelletizatio n | ○ | ○ | ○ | ○ | ○ | ○ | ○ | ○ | ○ |
| Marine Biodegrada tion Rate | ○ | Δ | Δ | ○ | ○ | ○ | ○ | ○ | Δ |

Table 2

| No. | Example 10 | Example 11 | Example 12 | Example 13 | Example 14 | Example 15 | CE1 | CE2 | CE3 |
|---|---|---|---|---|---|---|---|---|---|
| PHBH-BP3 30 | | | 5 | | | | 91.5 | 91.5 | 66.5 |
| PHBH-BP3 50 | 28.1 | 74.2 | 48.65 | 73.65 | 53.8 | 78.8 | | | |
| PHBV | 50 | | | | | | | | |
| P34HB | | | 20 | | | | | | |
| PHBO | | | | | 15 | | | | |
| P3HB3HV 3HH | | | | | | | | | |
| PLA | 5 | | 5 | | | | | | |
| PBS | 5 | | | | | | | | |
| PBSA | | 10 | | | | | | | |
| PBST | | | 5 | | | | | | |
| PBAT | | | | 10 | | | 8 | 8 | 33 |
| PCL | | | | | 10 | | | | |
| PGA | | | | | | 10 | | | |
| Activated light calcium carbonate | | 15 | | | 15 | | | | |
| Talc | 10 | | 15 | | | 5 | | | |
| Pre-plastici zed starch | | | | 15 | 5 | 5 | | | |
| ADR 4468 | 0.4 | 0.1 | 0.1 | 0.45 | 0.2 | 0.1 | 0.1 | 0.1 | 0.1 |
| 1010 | 0.5 | 0.3 | 0.3 | 0.1 | | 0.2 | 0.1 | 0.1 | 0.1 |
| 1076 | | | 0.2 | | 0.5 | | | | |
| 168 | | 0.2 | | | | 0.2 | 0.1 | 0.1 | 0.1 |
| 626 | 0.5 | | 0.35 | 0.5 | 0.1 | | | | |
| Calcium stearate | | | | 0.05 | 0.3 | 0.15 | 0.2 | 0.2 | 0.2 |
| Oleamide | 0.5 | 0.2 | 0.4 | 0.25 | 0.1 | 0.55 | | | |

(continued)

| | | | | | | | | | |
|---|---|---|---|---|---|---|---|---|---|
| Process parameters | | | | | | | | | |
| Mixing temperatur e (°C) | room temperat ure | room temperat ure | room temperat ure | 40 | room temperat ure | room temperat ure | room temperat ure | room temperat ure | room temperat ure |
| Mixing speed (r/min) | 100 | 300 | 500 | 700 | 100 | 1000 | 200 | 200 | 200 |
| Mixing time (min) | 7 | 5 | 5 | 8 | 5 | 5 | 5 | 5 | 5 |
| LID ratio of extruder | 40:1 | 36:1 | 44:1 | 48:1 | 48:1 | 56:1 | 36:1 | 36:1 | 36:1 |
| Extruder temperatur e range (°C) | 45-175 | 50-145 | 70-170 | 50-145 | 50-140 | 80-210 | 50-160 | 50-160 | 50-160 |
| Screw speed (r/min) | 300 | 200 | 250 | 350 | 350 | 450 | 350 | 350 | 350 |
| Cool cutting manner | die face air cooling | underwa ter cutting | water cooling | water cooling | die face air cooling | underwa ter cutting | water cooling | water cooling | water cooling |
| the second temperatur e for extrusion pelletizatio n (°C) | room temperat ure | room temperat ure | room temperat ure | room temperat ure | room temperat ure | room temperat ure | room temperat ure | 50°C | room temperat ure |
| Physical property parameters | | | | | | | | | |
| Tensile strength (MPa) | 23.54 | 25.63 | 26.32 | 24.3 | 22.7 | 30.1 | 32.15 | 32.15 | 22.81 |
| Elongation at break (%) | 534 | 342 | 431 | 320 | 510 | 132 | 15 | 15 | 54 |
| Notched impact strength ($kJ/m^2$) | 8.90 | 7.9 | 4.3 | 5.1 | 5.3 | 4.9 | 3.39 | 3.39 | 5.1 |
| Heat deflection temperatur e (0.45MPa °C) | 65 | 78 | 67 | 73 | 79 | 86 | 109 | 109 | 74 |
| Difficulty of extrusion pelletizatio n | ○ | ○ | ○ | ○ | ○ | ○ | Δ | ○ | ○ |
| Marine Biodegrada tion Rate | ○ | ○ | ○ | ○ | ○ | ○ | ○ | ○ | × |

Table 3

| No. | Example 16 | Example 17 | Example 18 | Example 19 | Example 20 | Example 21 | Example 22 |
|---|---|---|---|---|---|---|---|
| PHBH-BP350 | 51.05 | 48.75 | 48.8 | 43.6 | 66.3 | 75.15 | 86.7 |
| PLA | 8 | | | 5 | | | |
| PBS | | 10 | | | | | |
| PBSA | 5 | | | | 13 | | |
| PBST | | | | | | 15 | |
| PBAT | | | | | | | 10 |
| PCL | | 5 | | 15 | | | |
| PGA | 5 | 5 | 30 | 5 | | | |
| Activated light calcium carbonate | | | | | | 3 | |
| Talc | | | | | 5 | | 3 |
| Pre-plasticized starch | 30 | 30 | 20 | 30 | 15 | 5 | |
| ADR 4468 | | | | | | | |
| ADR4370F | 0.15 | 0.5 | | | | | 0.15 |
| RPS 1005 | | | | 0.1 | 0.2 | | |
| MDI-50 | | | 0.1 | | | 0.15 | |
| 1010 | 0.1 | 0.15 | 0.2 | 0.15 | 0.2 | 0.6 | 0.1 |
| 1076 | | | | 0.15 | | 0.1 | |
| 168 | 0.2 | 0.1 | | | | 0.2 | 0.2 |
| 626 | | | 0.3 | | 0.1 | 0.1 | |
| calcium stearate | 0.5 | | 0.3 | 1 | | 0.5 | 0.5 |
| oleamide | | 0.5 | 0.3 | | 0.2 | 0.2 | |
| Process parameters | | | | | | | |
| Mixing temperature (°C) | room temperature | room temperature | room temperature | room temperature | room temperature | room temperature | room temperature |
| Mixing speed (r/min) | 200 | 200 | 200 | 200 | 200 | 200 | 200 |
| Mixing time (min) | 5 | 5 | 5 | 5 | 5 | 5 | 5 |
| LID ratio of extruder | 36:1 | 36:1 | 36:1 | 36:1 | 36:1 | 36:1 | 36:1 |
| Extruder temperature range (°C) | 50-160 | 50-160 | 50-160 | 50-160 | 50-160 | 50-160 | 50-160 |
| Screw speed (r/min) | 350 | 350 | 350 | 350 | 350 | 350 | 350 |

(continued)

| Process parameters | | | | | | | |
|---|---|---|---|---|---|---|---|
| Cool cutting manner | water cooling | water cooling | water cooling | water cooling | water cooling | water cooling | water cooling |
| The second temperature for extrusion pelletization (°C) | room temperature | room temperature | room temperature | room temperature | room temperature | room temperature | room temperature |
| Physical property parameters | | | | | | | |
| Tensile Strength (MPa) | 26.33 | 24.12 | 46.33 | 23.15 | 21.19 | 24.23 | 25.35 |
| Elongation at break (%) | 113 | 167 | 56 | 341 | 276 | 419 | 354 |
| Notched impact strength ($kJ/m^2$) | 4.14 | 3.72 | 3.22 | 5.5 | 7.1 | 6.3 | 6.0 |
| Heat deflection temperature (0.45MPa °C) | 91 | 97 | 115 | 59 | 73 | 79 | 81 |
| Difficulty of extrusion pelletization | ○ | ○ | ○ | ○ | ○ | ○ | ○ |
| Marine Biodegradation Rate | ○ | ○ | ○ | ○ | ○ | ○ | ○ |

Tables 1 to 3 show the extrusion pelletising processes for pellets. It can be seen from the tables that the pellets prepared by using 38 to 89.5 parts of polyhydroxyalkanoate, 10 to 30 parts of other fully biodegradable resins, 0.1 to 0.5 parts of chain extenders, 0.1 to 1 part of antioxidants, 0.1 to 1 part of lubricants, and 0 to 30 part of fillers in Examples 1 to 22, meet the mechanical performance standards, they not only have high marine degradability, but also improve the processability and processing efficiency of blended materials, the extruded pellets have low viscosity and reduced sticking phenomenon, and can be cool molded at room temperature.

However, the contents of the polyhydroxyalkanoate and the other fully biodegradable resins in comparative examples 1 to 3 are not within the scope of the present invention, for example, the contents of polyhydroxyalkanoate in comparative examples 1 to 2 are too high, and the contents of the other fully biodegradable resins are too low, and thus, although the marine degradability is improved, the second temperature needs to be controlled within a certain range (such as 50 °C) during processing to reduce the difficulty of processing. In Comparative Example 3, the content of the other fully biodegradable resins is too high, and the elongation at break of the prepared pellets decreases significantly, and the degradation performance is obviously poor. However, within the scope of the composition of the present invention, the extrusion pelletising process can be realized without limiting the second temperature, which effectively improves the processing efficiency and reduces the energy consumption in the mass production process.

For polyhydroxyalkanoate (A), a single polymer was used in Examples 1 to 4 and 16 to 22, and mixed polymers were used in Examples 5 to 10, 12, and 14, and their effects are slightly different, but they generally have high marine degradability performance and good processability.

For other fully biodegradable resin(B), different kinds of complete biodegradable resins were used in examples 1 to 2, 4 to 5, 7 to 9, 11, 13 to 15, 18, and 20 to 22, and their effects are slightly different; mixed types of the fully biodegradable resins were used in examples 3, 6, 10, 12, 16 to 17, and 19, and their effects are slightly different, but they generally have high marine degradability and good processability.

The addition amount of the other fully biodegradable resin (B) was further studied. When the amount is within 10 to 30 parts by weight, such as in Example 1 to 22, the degradation rate in seawater can reach more than 50%, it can be seen that when the addition amount of the other fully biodegradable resin (B) is within the range of 10 to 30 parts by weight of the present application, the prepared molded body meets the requirements of marine degradability. For some

fully biodegradable resin (B) such as PLA and PBAT (Example 2 to 3), when its amount is within the preferred range of 10 to 15 parts by weight, the marine biodegradation rate is high, reaching the OK Biodegradable Marine certification standard, and more than 90% can be degraded. For some fully biodegradable resin (B) such as PGA, the marine biodegradation rate can be maintained at a relatively high level when its amount is within 10 to 30 parts by weight. For some fully biodegradable resin (B) such as PGA alone or its combination with PLA, PBS, PBSA, PCL, etc. (Examples 16 to 19), when its amount range is within 10 to 30 parts by weight, the marine biodegradation rate is also relatively high, reaching the OK Biodegradable Marine certification standard, and more than 90% can be degraded.

Table 4

| No. | Exampl e 23 | Exampl e 24 | Exampl e 25 | Exampl e 26 | Exampl e 27 | CE4 | CE5 | CE6 |
|---|---|---|---|---|---|---|---|---|
| Source of the formulation | Exampl e 1 | Exampl e2 | Exampl e3 | Exampl e7 | Exampl e 8 | CE1 | CE2 | CE3 |
| Process parameters | | | | | | | | |
| Temperature range of straw machine (°C) | 45-155 | 45-150 | 80-175 | 70-145 | 80-220 | 45-155 | 45-155 | 45-155 |
| Screw speed of straw machine (r/min) | 100 | 200 | 150 | 20 | 50 | 100 | 100 | 100 |
| water bath temperature for straws (°C) | room temperat ure | room temperat ure | room temperat ure | room temperat ure | room temperat ure | room temperat ure | 50 °C | room temperat ure |
| Physical property parameters | | | | | | | | |
| Difficulty of Straw processing | ○ | ○ | ○ | ○ | ○ | Δ | ○ | ○ |
| Marine biodegradation rate | ○ | ○ | ○ | ○ | ○ | ○ | ○ | Δ |

Table 4 shows the processing of straws. As can be seen from the table, the straws prepared in Examples 23 to 27 have a high marine biodegradability rate and reach the OK Biodegradable Marine certification standard; the straws have high processability and processing efficiency, and they can be cool formed at room temperature, which effectively improves the processing efficiency and reduces the energy consumption in the mass production process. However, the straws prepared in Comparative Examples 4 to 6 cannot meet the requirements in terms of marine degradability and processability, and during production and processing, the second temperature needs to be controlled within a certain range (such as 50 °C) to decrease the difficulty of processing.

Table 5

| No. | Exampl e 28 | Exampl e 29 | Exampl e30 | Exampl e 31 | Exampl e 32 | CE7 | CE8 | CE9 |
|---|---|---|---|---|---|---|---|---|
| Source of the formulation | Exampl e 1 | Exampl e2 | Exampl e9 | Exampl e13 | Exampl e 15 | CE1 | CE2 | CE3 |
| Process parameters | | | | | | | | |
| Temperature range of casting machine (°C) | 45-155 | 45-150 | 60-170 | 80-145 | 80-210 | 45-155 | 45-155 | 45-155 |
| Screw speed of casting machine (r/min) | 80 | 150 | 100 | 120 | 50 | 80 | 80 | 80 |
| Temperature of the circulating oil or circulating water in the casting roll (°C) | room temperat ure | room temperat ure | room temperat ure | room temperat ure | room temperat ure | room temperat ure | 50 °C | room temperat ure |
| Physical property parameters | | | | | | | | |
| Difficulty of film sheet processing | ○ | ○ | ○ | ○ | ○ | Δ | ○ | ○ |
| Marine biodegradation rate | ○ | ○ | ○ | ○ | ○ | ○ | ○ | Δ |

The casting processing results are shown in Table 5. It can be seen from the table that the film sheets processed by Examples 28 to 32 has high marine biodegradation rates and reach the OK Biodegradable Marine certification standard; and the film sheets have high processability and processing efficiency, and they can be cool formed at room temperature, which effectively improves the processing efficiency and reduces the energy consumption in the mass production process. However, the film sheets prepared in Comparative Examples 7 to 9 cannot meet the requirements in terms of marine degradability and processability, and the second temperature needs to be controlled within a certain range (such as 50 °C) during production and processing to reduce processing difficulty.

The above examples are only used to illustrate the technical solution of the present invention, not to limit the scope of the present application. Although the present invention has been described in detail with reference to the foregoing examples, those skilled in the art should understand that the technical solutions described in the foregoing examples can be modified or some or all of their technical features can be equivalently replaced without departing from the spirit and essence of the present invention; and these modifications or replacements are still within the scope of the present invention.

## Claims

1. A marine degradable polyhydroxyalkanoate composition, comprising, in parts by weight,

   (A): 38 to 89.5 parts of a polyhydroxyalkanoate;
   (B): 10 to 30 parts of an other fully biodegradable resin;
   (C): an additive including: 0.1 to 0.5 parts of a chain extender, 0.1 to 1 parts of an antioxidant, and 0.1 to 1 parts of a lubricant;
   (D): 0 to 30 parts of a filler.

2. The polyhydroxyalkanoate composition according to claim 1, wherein the other fully biodegradable resin(B) is selected from at least one of polylactic acid, polybutylene succinate, poly(butylene succinate-co adipate), poly(butylene succinate-co-terephthalate), poly(butylene adipate-co-terephthalate), polycaprolactone, and polyglycolic acid.

3. The polyhydroxyalkanoate composition according to claim 2, wherein the content of the other fully biodegradable resin(B) is 10 to 15 parts.

4. The polyhydroxyalkanoate composition according to any of claims 1 to 3, wherein in the additive (C) contained in the polyhydroxyalkanoate composition:

   the chain extender is at least one of ADR4468, ADR 4370F, RPS 1005, and MDI-50; and/or
   the antioxidant is selected from at least one of antioxidant 1010, 1076, 168 and 626; and/or
   the lubricant is selected from at least one of a fatty acid salt lubricant and a fatty amide lubricant.

5. The polyhydroxyalkanoate composition according to claim 4, wherein in the polyhydroxyalkanoate composition, the polyhydroxyalkanoate (A) is an aliphatic polyester comprising repeating units represented by the following general formula (1):

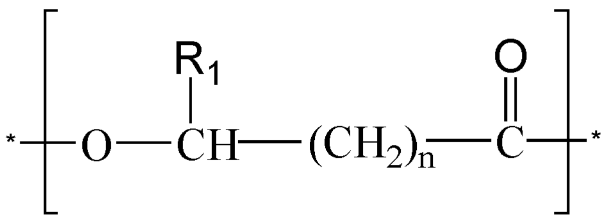

(1)

   wherein, $R_1$ is hydrogen or a linear or branched C 1-C 15 alkyl group; and
   n is 1 or 2.

6. The polyhydroxyalkanoate composition according to claim 5, wherein the polyhydroxyalkanoate (A) is selected from at least one of poly(3 -hydroxybutyrate-co-3 -hydroxyhexanoate), poly(3-hydroxybutyrate-co-3-hydroxyvalerate), poly(3 -hydroxybutyrate-co-4-hydroxybutyrate), poly(3-hydroxybutyrate-co-3-hydroxyoctanoate), and poly(3-hydroxybutyrate-co-3-hydroxyvalerate-co-3-hydroxyhexanoate).

**7.** The polyhydroxyalkanoate composition according to claim 1, wherein the filler (D) includes an inorganic filler and/or a bio-based filler;

the inorganic filler is selected from at least one of talc and activated light calcium carbonate;
the bio-based filler is selected from at least one of pre-plasticized starch, microcrystalline cellulose and coffee grounds.

**8.** A molded body molded from the polyhydroxyalkanoate composition of any one of claims 1-7.

**9.** A method for preparing the molded body of claim 8, comprising the step of: heating and melting the polyhydroxyalkanoate composition at a first temperature that is 10 °C to 60 °C higher than the melting temperature; cooling and molding at a second temperature of 20 °C to 60 °C to obtain the molded body.

**10.** The method according to claim 9, wherein the polyhydroxyalkanoate composition is heated and melted at the first temperature; and then cooled and molded at room temperature to obtain a molded body.

**INTERNATIONAL SEARCH REPORT**

International application No.
**PCT/CN2022/136554**

**A. CLASSIFICATION OF SUBJECT MATTER**

C08L67/04(2006.01)i

According to International Patent Classification (IPC) or to both national classification and IPC

**B. FIELDS SEARCHED**

Minimum documentation searched (classification system followed by classification symbols)

C08L

Documentation searched other than minimum documentation to the extent that such documents are included in the fields searched

Electronic data base consulted during the international search (name of data base and, where practicable, search terms used)

CNTXT, DWPI, ENTXT, CJFD, WFNPL, CNKI: 聚羟基烷酸酯, PHA, 3-羟基丁酸酯, 聚(3-羟基丁酸酯-共-3-羟基戊酸酯, P3HB3HV, PHBV, 聚(3-羟基丁酸酯-共-3-羟基戊酸酯-共-3-羟基己酸酯), P3HB3HV3HH, 聚(3-羟基丁酸酯-共-3-羟基己酸酯), P3HB3HH, PHBH, 聚(3-羟基丁酸酯-共-3-羟基庚酸酯), 聚(3-羟基丁酸酯-共-3-羟基辛酸酯), PHBO, 聚(3-羟基丁酸酯-共-4-羟基丁酸酯), P3HB4HB, P34HB, 聚乳酸, PLA, 扩链剂, ADR4468, 聚丁二酸丁二醇酯, PBS, 聚丁二酸/己二酸丁二醇酯, PBSA, 聚丁二酸/对苯二甲酸丁二醇酯, PBST, 聚己二酸/对苯二甲酸丁二醇酯, PBAT, 聚己内酯, PCL, 聚乙醇酸, PGA

**C. DOCUMENTS CONSIDERED TO BE RELEVANT**

| Category* | Citation of document, with indication, where appropriate, of the relevant passages | Relevant to claim No. |
|---|---|---|
| PX | CN 115058108 A (BEIJING BLUEPHA MICROBIOLOGY TECHNOLOGY CO., LTD.) 16 September 2022 (2022-09-16)<br>claims 1-10, and description, paragraphs 0010-0062, and embodiments 1-20 | 1-10 |
| Y | 张兆哲 等 (ZHANG, Zhezhao et al.). "P(3HB-co-4HB)/PLA共混物的扩链改性研究 (Studies on Chain Extension Modification of P(3HB-co-4HB)/PLA Blends)" *天津科技大学学报 (Journal Journal of Tianjing University of Science & Technology),* Vol. 4, No. 2, 25 April 2012 (2012-04-25), 34-38<br>sections 1.1-1.2 | 1-10 |
| Y | CN 112140494 A (HUNAN KELAIBAO BIOLOGICAL ENERGY TECHNOLOGY CO., LTD.) 29 December 2020 (2020-12-29)<br>claims 1-8, and description, paragraphs 7-25, and embodiments 1-2 | 1-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 May 2023** | **11 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

## INTERNATIONAL SEARCH REPORT

International application No.
PCT/CN2022/136554

### C. DOCUMENTS CONSIDERED TO BE RELEVANT

| Category* | Citation of document, with indication, where appropriate, of the relevant passages | Relevant to claim No. |
|---|---|---|
| Y | CN 104691067 A (BEIJING TECHNOLOGY AND BUSINESS UNIVERSITY) 10 June 2015 (2015-06-10)<br>claims 1-9, and description paragraphs 0009-0032, and embodiments 1-7 | 1-10 |
| Y | CN 105153405 A (NOVAMONT S.P.A.) 16 December 2015 (2015-12-16)<br>description, paragraphs 0008-0026 | 1-10 |
| Y | CN 107849341 A (NOVAMONT S.P.A.) 27 March 2018 (2018-03-27)<br>claim 1, and description, paragraphs 0006-0070 | 1-10 |
| Y | CN 107849342 A (NOVAMONT S.P.A.) 27 March 2018 (2018-03-27)<br>claim 1, and description, paragraphs 0006-0070 | 1-10 |
| Y | CN 111133052 A (ENVIROCARE S.R.O.; PANARA S.R.O.) 08 May 2020 (2020-05-08)<br>claim 1, and table 17 | 1-10 |
| A | CN 108624012 A (SHENZHEN ECOMANN BIOTECHNOLOGY CO., LTD.) 09 October 2018 (2018-10-09)<br>claims 1-8, and description, paragraphs 4-13, and embodiments 1-3 | 1-10 |
| A | WO 2010009656 A1 (G5 INTERNATIONAL HOLDINGS PTE LTD) 28 January 2010 (2010-01-28)<br>claims 1-10, and embodiments 1-4 | 1-10 |

Form PCT/ISA/210 (second sheet) (July 2022)

**INTERNATIONAL SEARCH REPORT**
**Information on patent family members**

International application No.
**PCT/CN2022/136554**

| Patent document cited in search report | Publication date (day/month/year) | Patent family member(s) | Publication date (day/month/year) |
|---|---|---|---|
| CN 115058108 A | 16 September 2022 | None | |
| CN 112140494 A | 29 December 2020 | None | |
| CN 104691067 A | 10 June 2015 | None | |
| CN 105153405 A | 16 December 2015 | EP 2276789 A1 | 26 January 2011 |
| | | EP 2276789 B1 | 30 July 2014 |
| | | EP 2276789 B2 | 18 July 2018 |
| | | ITMI 20080840 A1 | 09 November 2009 |
| | | IT 1387503 B | 13 April 2011 |
| | | US 2011071238 A1 | 24 March 2011 |
| | | US 10316139 B2 | 11 June 2019 |
| | | PL 2276789 T3 | 27 February 2015 |
| | | PL 2276789 T5 | 31 December 2018 |
| | | KR 20110008318 A | 26 January 2011 |
| | | KR 101626997 B1 | 03 June 2016 |
| | | CA 2721699 A1 | 12 November 2009 |
| | | CA 2721699 C | 28 March 2017 |
| | | JP 2011520005 A | 14 July 2011 |
| | | JP 5736303 B2 | 17 June 2015 |
| | | MX 2010012102 A | 30 November 2010 |
| | | US 2020079899 A1 | 12 March 2020 |
| | | US 11345779 B2 | 31 May 2022 |
| | | WO 2009135921 A1 | 12 November 2009 |
| | | BRPI 0908672 A2 | 18 July 2017 |
| | | BRPI 0908672 B1 | 10 December 2019 |
| | | ES 2511915 T3 | 23 October 2014 |
| | | ES 2511915 T5 | 19 November 2018 |
| | | US 2016200862 A1 | 14 July 2016 |
| | | US 10526442 B2 | 07 January 2020 |
| CN 107849341 A | 27 March 2018 | WO 2017021335 A1 | 09 February 2017 |
| | | ITUB 20152688 A1 | 31 January 2017 |
| | | PL 3328940 T3 | 08 March 2021 |
| | | US 2020369871 A1 | 26 November 2020 |
| | | US 11434363 B2 | 06 September 2022 |
| | | US 2020369870 A1 | 26 November 2020 |
| | | US 11427708 B2 | 30 August 2022 |
| | | EP 3808812 A1 | 21 April 2021 |
| | | WO 2017021337 A1 | 09 February 2017 |
| | | WO 2017021338 A1 | 09 February 2017 |
| | | EP 3328940 A1 | 06 June 2018 |
| | | EP 3328940 B1 | 30 September 2020 |
| | | ES 2827952 T3 | 25 May 2021 |
| | | EP 3800222 A1 | 07 April 2021 |
| | | US 2018208760 A1 | 26 July 2018 |
| | | US 10597528 B2 | 24 March 2020 |
| | | US 2022372278 A1 | 24 November 2022 |
| | | PL 3328941 T3 | 19 September 2022 |
| | | EP 4032953 A1 | 27 July 2022 |
| | | PL 3328939 T3 | 31 March 2020 |
| | | US 2018208761 A1 | 26 July 2018 |
| | | US 10774213 B2 | 15 September 2020 |

Form PCT/ISA/210 (patent family annex) (July 2022)

**INTERNATIONAL SEARCH REPORT**
**Information on patent family members**

International application No.
**PCT/CN2022/136554**

| Patent document cited in search report | Publication date (day/month/year) | Patent family member(s) | Publication date (day/month/year) |
|---|---|---|---|
| | | EP 3328941 A1 | 06 June 2018 |
| | | EP 3328941 B1 | 13 April 2022 |
| | | EP 3328939 A1 | 06 June 2018 |
| | | EP 3328939 B1 | 13 November 2019 |
| | | ES 2913899 T3 | 06 June 2022 |
| | | US 2018223095 A1 | 09 August 2018 |
| | | US 10774214 B2 | 15 September 2020 |
| | | ES 2759368 T3 | 08 May 2020 |
| | | US 2022363891 A1 | 17 November 2022 |
| CN 107849342 A | 27 March 2018 | None | |
| CN 111133052 A | 08 May 2020 | EP 3681951 A1 | 22 July 2020 |
| | | US 2020270450 A1 | 27 August 2020 |
| | | BR 112020004355 A2 | 08 September 2020 |
| | | BR 112020004355 B1 | 07 March 2023 |
| | | AU 2017431602 A1 | 05 March 2020 |
| | | AU 2017431602 B2 | 01 December 2022 |
| | | RU 2020111722 A3 | 13 October 2021 |
| | | RU 2020111722 A | 16 December 2021 |
| | | SK 922017 A3 | 02 April 2019 |
| | | SG 11202002216 TA | 29 April 2020 |
| | | CA 3075735 A1 | 21 March 2019 |
| | | CA 3075735 C | 21 March 2023 |
| | | CL 2020000513 A1 | 21 September 2020 |
| | | WO 2019054951 A1 | 21 March 2019 |
| CN 108624012 A | 09 October 2018 | None | |
| WO 2010009656 A1 | 28 January 2010 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202210977996